# EUROPEAN PATENT APPLICATION

(11) **EP 1 464 469 A2**
(43) Date of publication of application: **06.10.2004**
(21) Application number: 04101077.8
(22) Date of filing: 16.03.2004
(51) Int. Cl.: B29C 59/04, B29C 43/22

(54) **Engraving device particularly for engraving materials in deformable condition**

(30) Priority: 04.04.2003 IT MI20030659
(71) Applicant: STEEL BELT SYSTEMS S.R.L., 20149 MILANO (IT)
(72) Inventor: Calamara', Giovanni, 20149, MILANO (IT)
(74) Representative: Ponzellini, Gianmarco

(57) **Abstract**

It is disclosed an engraving device active on a material in a plastic state in which the material moves forward on a first drum or roller (2) and cooperates with a second roller (6) which is also operatively active on the material to allow a starting rolling of same and a simultaneous engraving of a predetermined number of notches (9) transverse to the progress direction of the material (5). A third shaping roller (10) is then provided which is also active on the material moving forward downstream of the second roller (6). The material provided with the transverse notches (9) is directed to a gap included between the first roller (2) and third roller (10) to be submitted to further engraving of a predetermined number of longitudinal notches (11) orthogonal to the previously made notches (9). The device being the object of the invention allows an efficient rolling of the material in a plastic state and a simultaneous engraving action so as to obtain a material divided into squares that can be more easily reduced to discrete elements (20).

## Description

The present invention relates to an engraving device, in particular for engraving materials in a deformable state.

The device in accordance with the invention is adapted to cause advancing of a material in a plastic state, that must be gradually cooled, through shaping rollers to form a sheet of suitably engraved material so that it can be worked in order to obtain a predetermined number of discrete elements or chips, separated from each other, received in a gathering station.

It is known that there are on the market different apparatus for working plastic materials and resins in which, downstream of an extruder, two calendering rollers are present for suitably rolling the material in a plastic state and therefore enable laying of same on a conveyor belt, such as a metal belt, designed to cause advancing of the material and at the same time to cool it by use of suitable cooling water jets, for example.

Once cooled, the sheet material is broken so as to be reduced to chips of appropriate sizes.

In this connection two counter-rotating comb-shaped elements are used that are able to take up the solidified sheet material (generally of a thickness of some millimetres) and exert breaking forces thereon.

It is apparent that the last-mentioned operation first of all involves generation of undesired powders that, on the one hand, cause pollution in the surrounding environment, so that the workers assigned to the above mentioned equipment need to be protected from breathing said powders and, on the other hand, give rise to waste of material, said powders being in any case "scraps".

In addition, it is to be pointed out that, due to their own nature, the counter-rotating comb-shaped elements acting on the material generate a strong noise and therefore also give rise to acoustic pollution.

In order to solve these drawbacks at least partly, different solutions were studied, one of which provides for appropriate notches being made on the material before the cooling step and during moving forward of the material itself on the conveyor belt.

In particular, two shaping rollers have been disposed in line, one of which creates a predetermined number of longitudinal notches (parallel to the feeding direction of the belt) in the sheet material moving forward on the belt, whereas the second roller placed downstream of the first one generates a predetermined number of transverse notches (orthogonal to the feeding direction of the belt).

In this manner the sheet material is divided into squares and exactly at the engraved region it presents frangible points ensuring crushing with less noise and generation of a reduced amount of powder.

While these devices solve the above mentioned problems at least partly, they too suffer from some drawbacks and/or operating limits.

First of all the previously described machines carry out working operations on the sheet material where the latter has already begun solidification and therefore the rollers require a suitably gauged positioning to avoid working of the material when it is no longer in a plastic state and therefore can be hardly engraved (above all in the case of thermosetting materials).

Furthermore, due to the possibility of these machines of carrying out working operations on several different materials, the above mentioned problems become more serious because often when a material is to be changed, necessarily the work position of the rollers must be modified, so that the latter are to be dismantled, moved upstream or downstream along the belt and then reassembled.

As a result of the above, the described machines show complexity in setting up and difficult adaptability to the different materials to be worked.

In addition, it is to be pointed out that it is presently difficult to modify the standard belt conveyor means in a simple and inexpensive manner in order to obtain engraved sheet materials to be reduced to chips.

Accordingly, it is an object of the present invention to substantially solve all the above mentioned drawbacks.

It is a first aim of the invention to make available a device capable of rolling or calendering a suitable material in a plastic state while at the same time generating the appropriate longitudinal and transverse notches or engravings thereon so as to promote the operations for separating the various chips.

It is a further aim of the invention to generate a rolling and engraving structure that can be adapted to different machines equipped with belt conveying means.

It is an auxiliary aim of the invention to also make available a new crushing device that is able to operate on suitably engraved sheet materials so as to generate noise and powder to the smallest possible degree.

The foregoing and further aims that will become more apparent in the course of the present description are substantially achieved by a device for engraving sheet material in accordance with the features recited in the appended claims.

Further features and advantages will be best understood from the detailed description of a preferred, but not exclusive, embodiment of an engraving device for sheet material in accordance with the present invention.

This description will be taken hereinafter with reference to the accompanying drawings, given by way of nonlimiting example, in which:
- Fig. 1 shows an engraving device for material in a plastic state in accordance with the present invention;
- Fig. 2 shows the device in Fig. 1 mounted on a belt cooler;
- Fig. 3 is a section view of a first roller of the device in Fig. 1;
- Figs. 4b and 4a are views partly in section of the second and third rollers shown in Fig. 1;
- Fig. 5 shows a mixed double-acting cooler incorporating the device in accordance with the invention;
- Fig. 6a shows the material in a plastic state coming out of the second engraving roller;
- Fig. 6b shows the material in a plastic state coming out of the third engraving roller;
- Fig. 6c is a section view of Fig. 6b taken along line VI-VI;
- Fig. 7 is a side view partly in section of one of the counter-rotating rollers of the separating unit; and
- Fig. 8 shows two of said rollers coupled with each other.

With reference to the drawings, generally identified with reference numeral 1 is an engraving device to be in particular used for rolling or calendering and dividing into squares materials such as resins, thermoplastic or thermosetting materials or similar materials in a pasty or soft state or even of both thermoplastic and thermosetting resins in an initial fluid state, etc.

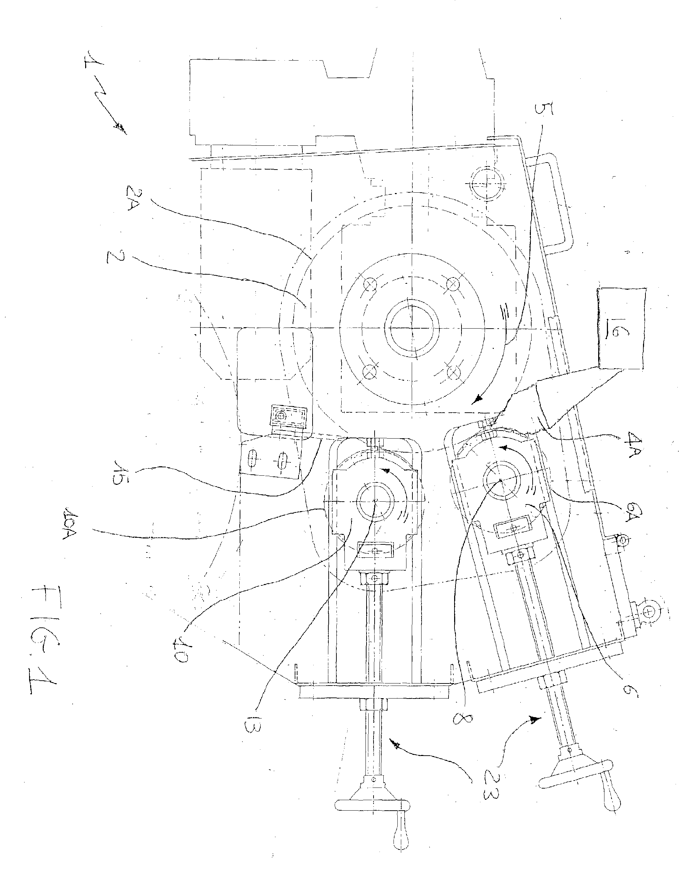

Looking in particular at Fig. 1, it is possible to see that the device essentially consists of a first, a second and a third roller 2, 6, 10.

In the whole description by the term "roller" it is intended an element of substantially cylindrical shape that can be driven in rotation around its own axis; in other words, no distinction will be made between the terms rollers and drums.

The first roller 2 has a smooth outer surface 2a set to receive a predetermined material to be engraved 4a and also allowing movement of said material in a progress or feeding direction 5.

Following the feeding direction of the material 5, there is the presence in succession of a second roller 6 drivable in rotation and operatively active on the material to be engraved 4a.

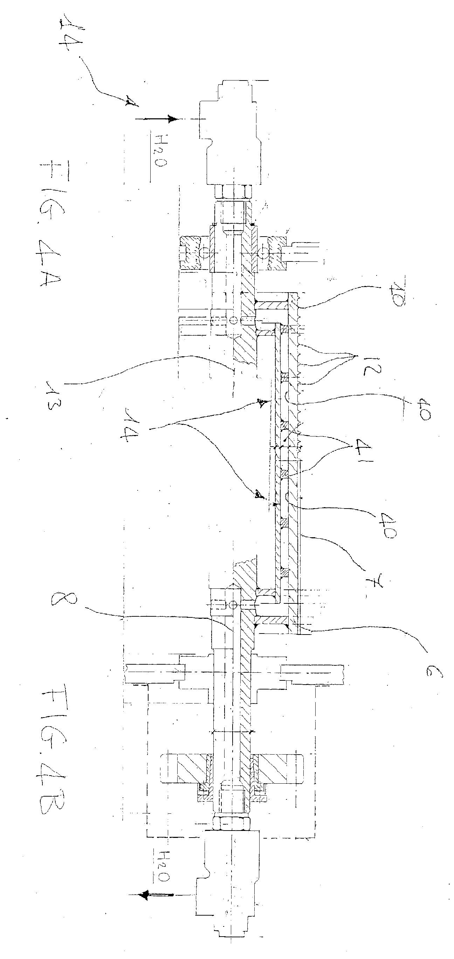

On its outer surface 6a, the second roller 6 has a predetermined number of ridges 7 with an axis substantially parallel to the axis 8 of the roller (in this connection see also Fig. 4b).

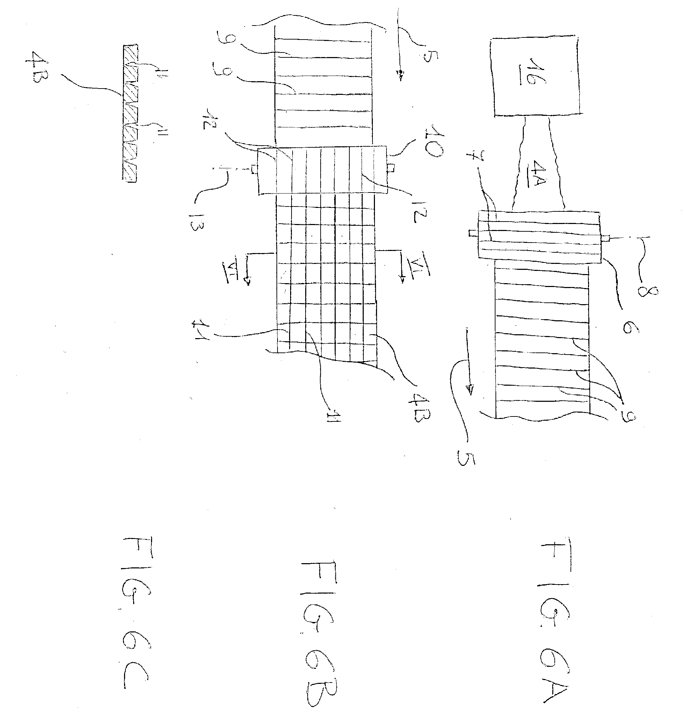

The ridges 7 are designed to create in the material moving forward, a plurality of transverse notches 9 that are preferably orthogonal to the feeding direction of the material 5 (Fig. 6a).

In addition to the above mentioned task, said second roller 6 also has the function of calendering or rolling the material reaching the outer surface 2a of the first roller 2.

In other words the second roller 6 (in combination and cooperation with the first roller 2) performs a dual function: firstly it urges the material in a plastic state to pass through the clearance defined between the first and second rollers 2, 6 thereby performing a straightening out action and bringing the material in a plastic state 4a that is susceptible of being fed under any geometrical conformation, to the form of a substantially flat sheet; secondly, it creates a predetermined number of notches 9 on the material that are orthogonal to the feeding direction 5 of the material itself.

In particular, looking at Fig. 6a it is possible to see the two typologies of activity performed by the second roller; the material 4a reaches the second roller having any geometrical shape and is straightened out, while the notches 9 are simultaneously engraved thereon. It is clear that Fig. 6a is an exemplary view of the actions performed by the second roller 6 shown in the device in Fig. 1.

Still in Fig. 1 it is possible to see that immediately downstream of the second roller 6 there is another roller 10, or third roller, which is as well drivable in rotation around its own axis 13 and operatively active on the material to be engraved 4a.

The third roller 10 as well has a predetermined number of ridges on its outer surface 10a and in detail it has cylindrical ridges 12 concentric with the axis 13, so as to define a plurality of longitudinal notches 11 on the material moving forward, which longitudinal notches 11 are generally transverse to the notches 9 previously made by the second roller 6.

Looking at the diagrammatic example in Fig. 6b again, it will be noticed that the material moving forward and already provided with all transverse notches 9 is engraved again so as to also show notches of the type shown in Fig. 6c.

As it is possible to see from Figs. 1 and 6a, the presence of suitable feeding means 16 to supply the material in a plastic state 4a to the first roller 2 is also provided. This feeding means 16 is of the standard type and therefore has been only represented in a diagrammatic form and may for example comprise an extruder having an extrusion head of any shape or even a reactor capable of continuously feeding the material in a fluid state (thermoplastic or thermosetting resins, etc. for example).

Furthermore, in order to enable an optimal moving forward and release of the material in a plastic state, the three rollers 2, 6, 10 are provided with appropriate heat-adjustment means 14 that is able to keep at least the surface temperature of the first roller 2 different from the surface temperature of the second and/or third rollers 6, 10.

Generally, the first roller 2 works at a surface temperature higher than the surface temperature of the second and/or third roller 6, 10.

In fact it has been proved that temperature differences between the outer surface of the rollers and the material (should this difference consist of a temperature of the roller surface lower than that of the material) help release of the material from the roller surface or, in other words, prevent the roller from driving in rotation the material that should stick thereon.

Therefore, by suitably cooling the engraving rollers 6, 10 the material in a plastic state is substantially prevented from remaining attached to said rollers.

If the surface of the greatest roller 2 is cooled to a lower degree a situation is created in which, if the material in a plastic state should tend to stick on the roller surface, this effect would be greater on roller 2. In this connection, shown in Fig. 1 is a scraping element 15 active on the smooth outer surface 2a of the first roller 2 to allow removal of possible undesirable material that should separate from the surface of drum 2. In other words, the material in a plastic state could at worst remain associated with the outer surface 2a and roller 2 is for the purpose provided with the scraping element that is capable of separating said material from the roller.

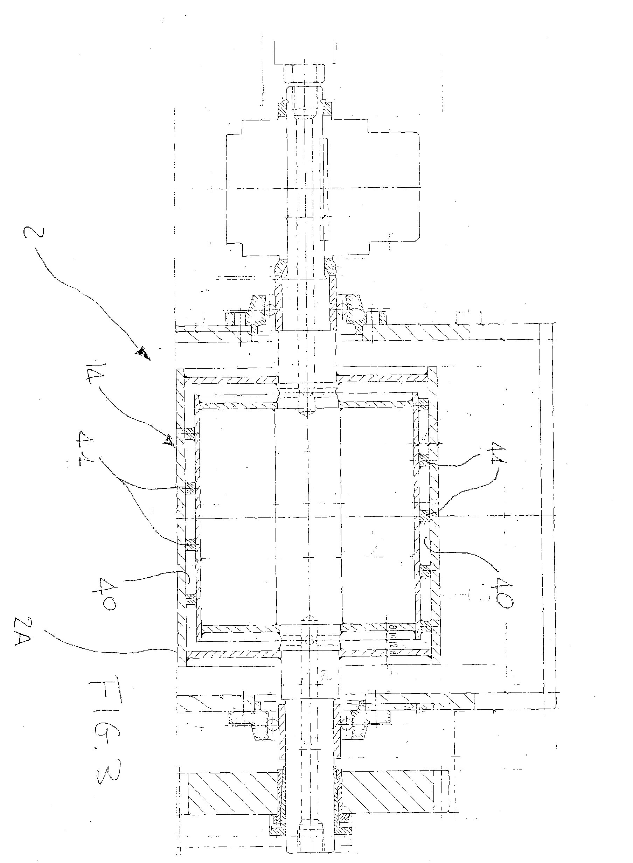

Looking at the section in Fig. 3 the structure of the heat-adjustment means 14 of the first roller 2 can be seen.

In particular it is possible to notice the presence of a perimetral outer hollow jacket 40 inside which circulation of water to a suitable temperature is for example caused. In particular, the water is moved on exactly at the outer surface following a spiral-like path by use of suitable separating baffles 41 still shown in Fig. 3. Obviously, other fluids can be used to ensure the appropriate cooling/heating actions.

Rollers 6, 10 too can have a structure similar to that shown in Fig. 3 (in this connection, see Figs. 4a, 4b).

Still in the first representation it is possible to see the presence of means 23 for adjusting the relative distance of the first roller 2 from the second and/or the third rollers 6, 10 to define the depth of notches 9, 11. In particular, said adjusting means 23 may be embodied by worm screws or equivalent systems.

Obviously at least one motor will be present to set the first roller 2 in rotation around the axis thereof and generally also an appropriate transmission will be present for operatively connecting the motor to the second and/or third roller 6, 10 and imparting a rotatory motion to the latter at a peripheral speed equal to the peripheral speed of the first roller 2.

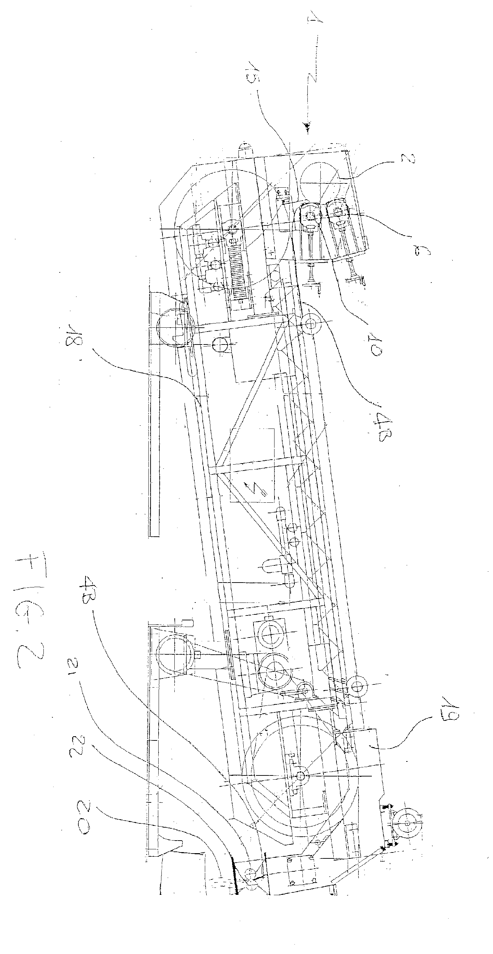

The installation shown in Fig. 2 is now examined and again the presence of the engraving device 1 is noticed, said device being able to move the material in a plastic state divided into squares and to allow arrangement of same on a conveyor belt 18 set to enable progressive cooling of the engraved sheet material 4b.

During moving forward of the material in fact, standard cooling systems may be present which consist of suitable air or water jets at the lower surface of the conveyor belt, for example.

Then it is possible to see a separation unit 19 active downstream of the conveyor belt 18 to allow the hardened engraved material 4b to be reduced to discrete elements 20.

The hardened material 4b in fact reaches the separation unit 19 in the form of a plurality of elements divided into squares and joined together by very thin films at the engraved regions.

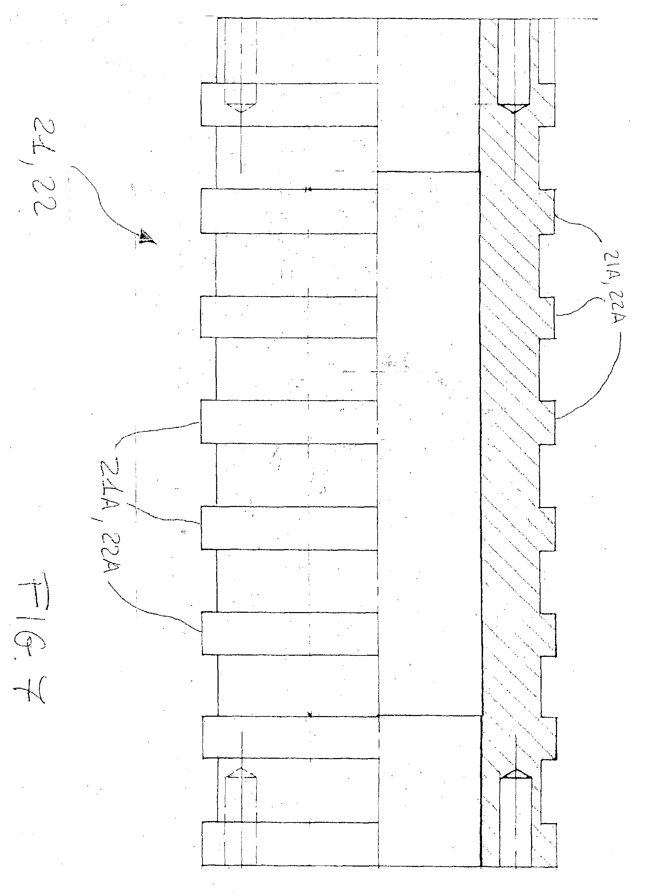

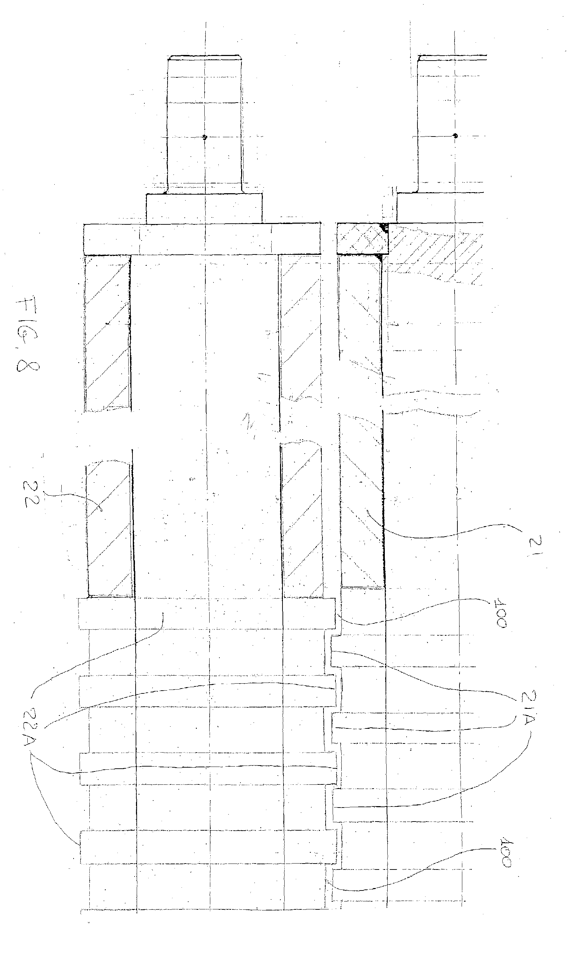

The separation unit in particular has two counter-rotating rollers 21, 22 (also shown in Figs. 7 and 8) provided with moulded surface shapes 21a, 22a cooperating with each other to carry out an efficient separation of the engraved material 4b.

As visible in particular in Fig. 7, each of these moulded surface shapes 21a, 22a is defined by circular toothings.

Specifically, shown in Fig. 8 is the cooperation of the two counter-rotating rollers 21, 22; the engraved material 4b is urged to between these two rollers (gap 100) so that the offset circular toothings catch the elements divided into squares and separate them by breaking the thin engagement layers left by the notches.

At this point the material reduced to discrete elements is suitably gathered in an end station.

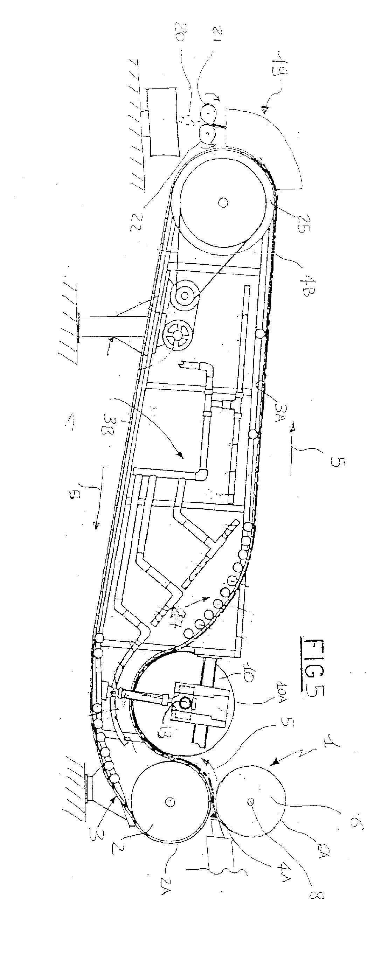

Fig. 5 shows a second embodiment of the device being the subject matter of the invention. Again there are the above described three rollers 2, 6, 10 designed to perform the same activities and having the same moulded surface shapes.

However, there is the presence of a conveyor belt on which the material in a plastic state 4a to be engraved is laid; the conveyor belt allows the material to move forward along the direction indicated in the figure by arrow 5.

The conveyor belt 3, preferably of a material having a high heat exchange, is mounted on the first roller 2 and on a further guide roller 25 that is such spaced apart from the first roller as to define a progress line 3a extending over the first roller and the further guide roller 25.

The progress line 3a is designed to carry the engraved product 4b laid close to the first roller 2, until the separation unit 19.

Since the conveyor belt defines a closed path around rollers 2 and 25, a return line 3b will be obviously present and it will extend under the progress line 3a of said rollers.

A motor operating at least on one of the two rollers 2, 25 drives them in rotation in such a manner that the engraved product 4b is brought from the first roller 2 to the further guide roller 25 to be then separated into discrete elements and gathered.

It is also possible to see the presence of guide means 27 active on the progress line of belt 3 downstream of the third roller 10 to guide the conveyor belt 3 along an ascending course away from the roller itself.

The particular arrangement of the three rollers 2, 6, 10, of the conveyor belt 3 and of the guide means 27 causes the contact arc of the conveyor belt 3 with the third roller 10 to be greatly increased.

In this way the device shown in Fig. 5 (also referred to on the market as mixed double-acting conveyor belt) allows an excellent heat elimination and therefore an optimal cooling of the material even on rather short distances and paths.

The invention achieves important advantages.

It is to be noted first of all that the engraving device being the object of the invention, leaving out of consideration the feeding device, is able to ensure an optimal straightening out of the deformable material in a pasty or soft state and a simultaneous division into squares of same so as to ensure separating operations with great reduction in acoustic pollution and production of powders.

On the other hand it is clear that, in order to allow straightening out of the material coming out of the feeding means 16, the second roller 6 must have ridges parallel to the axis 8 of the roller itself. This configuration in fact allows "widening" in the plane of the material 4a, when rolled.

Should rollers 6, 10 be reversed so that the engraving roller 10 is the first one, the straightening out operation would be made impossible because the cylindrical ridges 12 would exactly counteract the desired straightening-out step.

Furthermore, with reference to the apparatus of the type shown in Fig. 2, by simple modification operations it is possible to adapt machines of standard nature (i.e. without the engraving rollers) by converting them into devices of the new conception.

In addition, the inventive idea can apply, as shown in Figs. 2 and 5, to different typologies of belt devices and therefore has a wide application field.

## Claims

1. An engraving device, in particular for materials in a plastic state, **characterised in that** it comprises:
- at least one first roller (2) set to receive a predetermined material to be engraved, on the roller surface (2a) with or without interposition of a suitable conveyor belt (3), said roller (2) allowing movement of the material to be engraved in a progress or feeding direction (5);
- at least one second roller (6) drivable in rotation and operatively active on said material to be engraved (4a), said second roller (6) having a predetermined number of ridges (7) on its outer surface (6a), the axis of said ridges (7) being substantially parallel to the axis (8) of the second roller (6) and said ridges (7) being designed to create a plurality of transverse notches (9), preferably orthogonal to the material feeding direction (5) in the material that is moving forward;
- at least one third roller (10) drivable in rotation and operatively active on said material to be engraved (4a), said third roller (10) having a predetermined number of ridges on its outer surface (10a), said ridges being designed to create a plurality of longitudinal notches (11) transverse to the previously made notches (9) in the material that is moving forward, said third roller (10) being placed downstream of the second roller (6) along the material feeding direction (5).

2. A device as claimed in claim 1, **characterised in that** the third roller (10) has cylindrical ridges (12) concentric with the axis (13) of the roller (10) to define a plurality of longitudinal notches (11) in the material moving forward, which notches are substantially orthogonal to the transverse notches (9) made by the second roller (6).

3. A device as claimed in anyone of the preceding claims, **characterised in that** it further comprises heat-adjustment means (14) to maintain at least the surface temperature of said first roller (2) different from the surface temperature of said second and/or third roller (6, 10).

4. A device as claimed in claim 3, **characterised in that** the first roller (2) works at a surface temperature higher than the surface temperature of said second and/or third roller (6, 10).

5. A device as claimed in anyone of the preceding claims, **characterised in that** it comprises a scraping element (15) active on the outer surface (2a) of the first roller (2) to allow removal therefrom of undesirable possible material, separation of which from the surface (2a) itself did not occur.

6. A device as claimed in anyone of the preceding claims, **characterised in that** the first roller (2) has a smooth outer surface (2a) and preferably has a greater diameter than the diameter of said at least one second roller (6).

7. A device as claimed in anyone of the preceding claims, **characterised in that** it further comprises feeding means (16) to supply a material in a plastic state (4a) to the first roller (2), said feeding means (16) for example comprising an extruder with an extrusion head of any shape or a reactor adapted to continuously feed the material in a fluid state.

8. A device as claimed in claim 3, **characterised in that** the heat-adjustment means (40) comprises a cavity (40) internal to the first and/or second and/or third roller (2, 6, 10) , in the form of an outer perimetral jacket with a spiral-like course for example, to allow passage of water and/or of a suitable cooling/heating liquid.

9. A device as claimed in anyone of the preceding claims, **characterised in that** the second roller (6) has an outer surface (6a) disposed a predetermined distance from the first roller (2) so as to enable straightening out and/or rolling of the material (4a) fed onto said first roller (2) to obtain a sheet material with substantially flat upper and lower surfaces.

10. A device as claimed in anyone of the preceding claims, **characterised in that** it further comprises a conveyor belt (18) designed to move the engraved material (4b) and to allow a progressive cooling of same.

11. A device as claimed in the preceding claim, **characterised in that** it further comprises a separation unit (19) active downstream of the conveyor belt (18; 3) to enable reduction of the hardened engraved material (4b) to discrete elements.

12. A device as claimed in the preceding claim, **characterised in that** said separation unit (19) comprises two counter-rotating rollers (21, 22) provided with moulded surface shapes (21a, 22a) cooperating with each other to carry out an efficient separation of the engraved material (4b).

13. A device as claimed in claim 12, **characterised in that** the moulded surface shapes (21a, 22a) are defined by offset circular toothings cooperating with each other.

14. A device as claimed in anyone of the preceding claims, **characterised in that** it further comprises adjustment means to adjust a relative distance (23) between the first roller (2) and the second and/or the third roller (6, 10) to define the depth of said notches (9, 11).

15. A device as claimed in anyone of the preceding claims, **characterised in that** it comprises a continuous conveyor belt (3), preferably of a material with a high heat exchange, mounted on said first roller (2) and on a further guide roller (25) spaced apart from said first roller, such an arrangement defining a progress line (3a) extending over the first roller (2) and the further guide roller (25) and designed to convey the engraved product laid down in the vicinity of the first roller (2), as well as a return line (3b) extending under the progress line of said rollers (2, 25);
- a motor operating on at least one of said two rollers (2, 25) to drive them in rotation in such a manner that the engraved product (4b) is brought from the first roller (2) to the further guide roller (25) following movement of said belt (3), the third roller (10) being supported around a horizontal axis and positioned along the progress line of the belt to come into contact with the product to be engraved carried by it;
- guide means (27) active on the progress line of the belt (3a) downstream of the third roller (10) to guide the conveyor belt (3) along an ascending course away from the roller itself to increase the contact arc of the conveyor belt (3) with the third roller (10).

16. A device as claimed in claim 1, **characterised in that** it further comprises at least one motor to set the first roller (2) in rotation around its axis and a suitable transmission to operatively connect said motor to the second and/or third roller (6, 10) and impart a rotatory motion to it at the same peripheral speed as the peripheral speed of the first roller (2).

17. A method of engraving a predetermined material in a plastic state comprising the following steps:
- arranging at least one first roller (2) designed to receive a predetermined material to be engraved (4a) on its surface (2a);
- arranging at least one second roller (6) drivable in rotation around its axis, said second roller (6) having a predetermined number of ridges (7) on its outer surface (6a), said ridges having an axis substantially parallel to the axis (8) of the second roller (6);
- arranging at least one third roller (10) drivable in rotation around its axis, said third roller (10) having a predetermined number of cylindrical ridges (12) concentric with the axis (13) of the roller (10) on the outer roller surface (10a) ;
- moving said material to be engraved (4a) towards a passage clearance defined between the outer surfaces (2a, 6a) of said first roller (2) and second roller (6);
- rolling said material to be engraved (4a) in order to obtain a sheet material with substantially flat upper and lower surfaces and engraving a plurality of transverse notches (9), preferably orthogonal to a progress direction of the material (5), in the material moving forward;
- moving said material provided with transverse notches (9) towards a further gap defined between the outer surfaces (2a, 10a) of said first roller (2) and said third roller (10);
- defining a further plurality of notches (11), transverse to the previously made notches (9), in the material moving forward;
- cooling said sheet material provided with the transverse notches (9) and the longitudinal notches (11) in correspondence with the same surface; and
- separating from each other the elements divided into squares of the hardened engraved material (4b), to obtain a predetermined number of discrete elements (20).
